# EUROPEAN PATENT SPECIFICATION

(11) **EP 0 958 121 B1**
(45) Date of publication and mention of the grant of the patent: **02.02.2005**
(21) Application number: 96933712.0
(22) Date of filing: 04.10.1996
(51) Int. Cl.: B29C 47/24

(54) **A METHOD FOR CONTINUOUS MANUFACTURE OF PROFILED SECTIONS AND A DEVICE FOR PERFORMING THE METHOD**
VERFAHREN ZUM KONTINUIERLICHEN HERSTELLEN VON PROFILIERTEN TEILEN UND VORRICHTUNG ZUM DURCHFÜHREN DES VERFAHRENS
PROCEDE DE FABRICATION EN CONTINU DE PROFILES, ET DISPOSITIF POUR SA MISE EN OEUVRE

(30) Priority: 06.10.1995 SE 9503474
(43) Date of publication of application: 24.11.1999
(73) Proprietor: Markram AB, 513 21 Fristad (SE)
(72) Inventor: Jansson, Mark Lars, 502 61 Boras (SE)
(74) Representative: Ferkinghoff, Claes-Göran
(86) International application number: PCT/SE1996/001253
(87) International publication number: WO 1997/012745

(56) References cited:
- DE-A- 4 308 023
- GB-A- 1 174 287
- NO-B- 134 736
- SE-B- 307 007
- US-A- 4 053 274
- US-A- 4 924 690

## Description

The present invention relates to a method for continuous manufacture of profiledd sections.

In continuous casting according to prior-art technology, it is possible to manufacture elongate profiled sections in a variety of highly diversified cross-sectional configurations. However, it is only possible to produce profiled sections having either smooth side faces or side faces presenting ribbed structures extending in the longitudinal direction of the profiled section. It has not been possible to manufacture profiled sections having transversally extending ribs or profiled sections having parts projecting transversally from the sections.

As one obvious example of the need for profiled sections of the latter kind may be mentioned various framework structures, such as the masts for radio and television broadcasting antennae. In this case, elongate profiled sections are manufactured, in which a number of holes are drilled, both holes formed at the section ends to allow the profiled sections to be interconnected into longer lengths by means of bolt joints, and equidistantly spaced holes intermediate the profiled section ends in order to thus, also by means bolt joints, attach transverse stays between the elongate profiled sections thus to build a mast. The boring of the lengthwise profiled sections and assembly of the latter and of the transverse stays is a time-consuming work requiring highly skilled personnel to mount the mast to ensure that the latter will be a safe construction. Interconnecting the lengthwise sections and transverse stays by welding instead of be screwing also is a time-consuming operation.

For some materials, such as plastic resin, moulding can be an alternative way to provide profiles or webs having transverse patterns. The document GB 1,174,287 gives an example of such moulding, using a rotating mould.

The invention provides a method making it possible to extrude profiled sections of considerably more varied types than has hitherto been possible, including profiled sections formed with transversally projecting profiled section parts. The characteristic features of the method appear from the appended claims 1 and 2.

The invention likewise concerns a device for performing the method for continuous extrusion of profiled sections. The features characterising this device appear from the appended claims 3 and 4.

The invention will be described in more detail in the following with reference to the accompanying drawings, wherein: ,
Fig. 1 is a longitudinal sectional view through one embodiment of the device in accordance with the invention,
Fig. 2 is another longitudinal sectional view through the device,
Fig. 3 is a view of the device as seen from above,

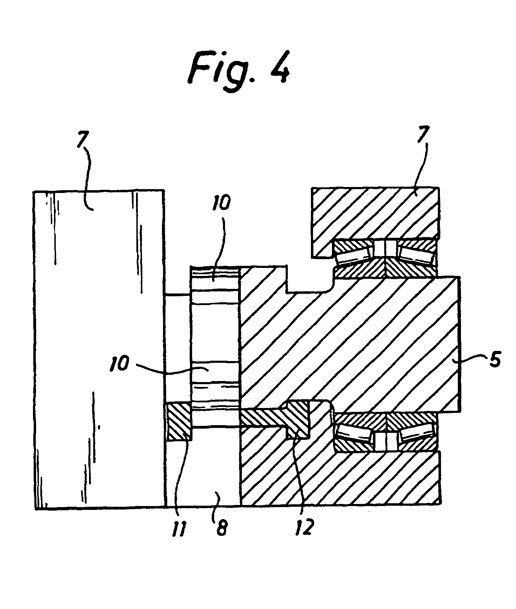

Fig. 4 illustrates the device on an enlarged scale in a sectional view taken on line 4-4 in Fig. 3,
Fig. 5 shows the device in accordance with a different embodiment thereof in a perspective view and on an enlarged scale.

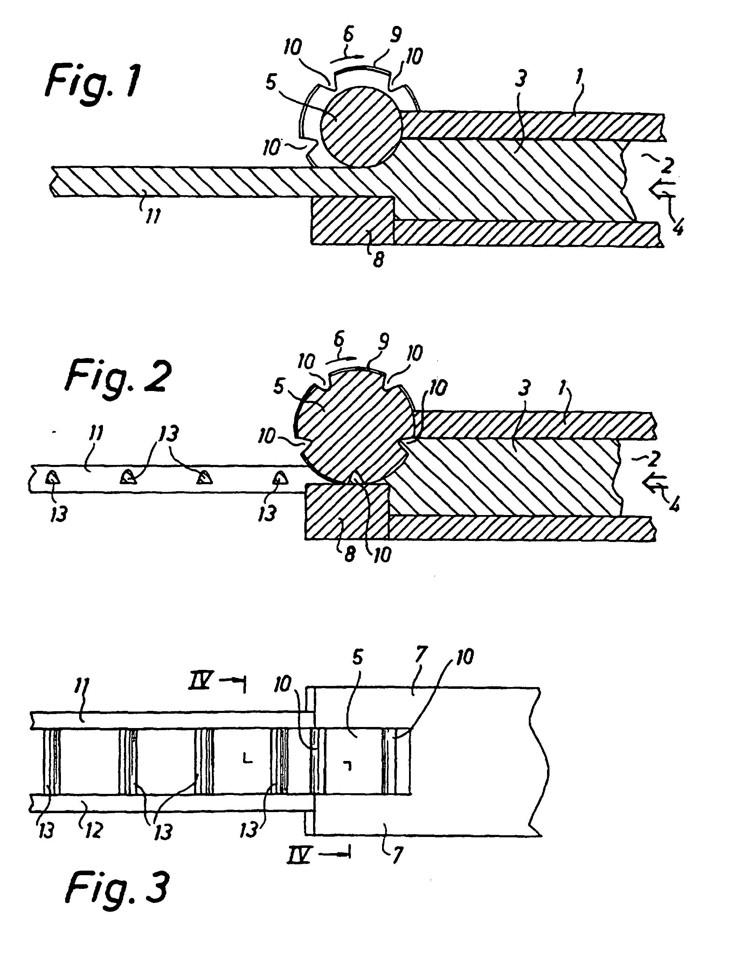

A section-shaping tool 1 is provided with a passageway 2 into which is supplied a compound 3 in the form of plastically/thermally mouldable material, such as a heated metal, on which pressure is continuously exerted to urge the compound forwards in the direction of arrow 4 in Figs 1 and 2. The shaping tool 1 includes a die, which is arranged for rotable movement in the direction of arrow 6 while being mounted in bearing boxes 7 arranged on either side of the die 5. The die 5 rotates in abutment against stationary die 8 and on its peripheral face 9 it is provided with equidistantly spaced recesses 10.

In accordance with the shown embodiment the shaping tool 1 has two outlet mouths allowing two parallell strings 11,12 of material to be continuously extruded between the rotating die 5 and the stationary die 8 while the material 3 is being pressed forward. Simultaneously with the advancement of the material and the rotation of the die 5 one recess 10 at a time is filled with material 3 the latter being integral with the lengthwise strings 11, 12, and forming equidistantly spaced transverse profiled section parts or stays 13.

In accordance with the embodiment chosen, the resultant composite profiled section thus will be given a ladder-like configuration wherein the lengthwise strings or profiled sections 11,12 and the transverse stays 13 together form one single, continuous piece. In this manner, sections of considerable length may be manufactured, the component parts of which need no longer, contrary to what has hitherto been required, receive further treatment, for instance to have holes bored therein, nor is it necessary to assemble the parts by means of bolt joints or in any other way. The transverse stays 13 may be configured in various ways by changing the shape of the recesses 10 and the stays need not extend at right angles to the lengthwise profiled section 11,12 in the manner illustrated but could equally well extend obliquely at an angle suitable for the intended purpose.

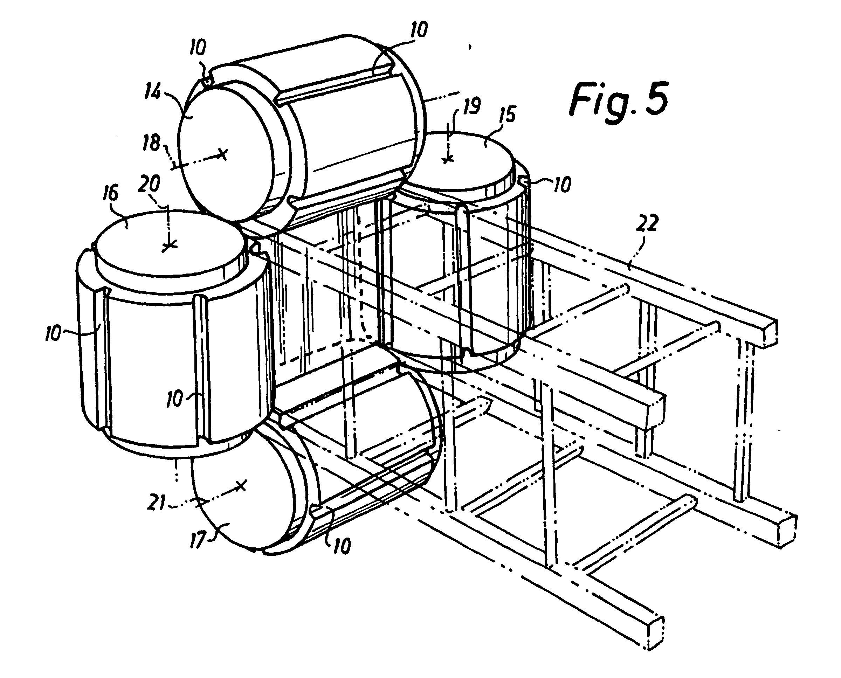

Fig. 5 illustrates an embodiment according to which the device comprises four dies 14,15,16 and 17. The dies are so positioned relatively to one another that the rotational axis 18,19,20 and 21 of each die is directed perpendicularly to the rotational axes of neighbouring dies. Owing to this arrangement it becomes possible to produce a finished framework construction 22 already during the continuos profiled-section shaping process proper, as indicated in dash-and-dot lines. The entire construction is one integral piece, just like the profiled section in accordance with the earlier embodiment. From this example are easily understood the considerable time and cost savings that are obtained because the need for assembling and mounting of the profiled-section parts of the construction has been obviated.

The device according to the invention may be used to manufacture a large variety of different profiled sections in a variety of different materials. For use in the electric field, ladder shaped cables may be manufactured, within the aeroplane, train, boat and car industries lightweight aluminium profiled sections may be manufactured the strength of which does not depend entirely on the material but also on the fact that during the manufacture by means of rotation dies a rolling effect is achieved, i.e. a change of the material structure in the surface layer of the material while at the same time there is no need for drilling holes in the profiled sections, which has a weakening effect thereon. The device in accordance with the invention is also very well suited for producing profiled sections adapted for erection of various types of masts, for instance collision-safe poles for mounting of street lights and traffic lights which poles, upon impact, yield and bend instead of penetrating into the colliding vehicle. Also in a great variety of other situations it is possible to use profiled sections manufactured in accordance with the method and with the aid of the device in accordance with the invention.

Consequently, the invention is not limited to the embodiments described and illustrated herein but could be varied in many ways within the scope of the appended claims. Instead of manufacturing a profiled-section incorporating transversally projecting profiled section parts it is possible to provide the die 5 with recesses of such a kind that the lengthwise profiled section 11 and 12 will have a rack-like configuration. The resultant rack will possess extremely high strength since its surface structure will differ from that of a rack having cogs cut therein.

## Claims

1. A method for continuous extrusion of profiled sections, **characterized by**
continuously forcing a compound (3) in the form of a plastically/thermally deformable material through a passageway (2),
extruding said material between a rotating die (5) and an opposing die (8), said rotating die rotating around an axis essentially perpendicular to the direction of extrusion, for forming one or several lengthwise profiled sections (11,12), and
pressing said material (3), during the advancement thereof, into one or several recesses (10) formed in the peripheral face (9) of the rotating die (5) in order to form, during the rotation of the die (5), transverse spaced-apart profiled section parts (13) in or laterally of said lengthwise profiled-sections (11,12) and integrally with such section or sections.

2. A method as claimed in claim 1, **characterized in that** the advancing material (3) is formed into two parallel lengthwise profiled sections (11,12), and **in that** the material (3) introduced into the recess or recesses (10) of the die (5) during the rotation of the latter, forms profiled-section parts (13) in the shape of transverse stay members extending between said profiled sections (11,12) and being formed integrally therewith.

3. A device for continuous extrusion of profiled sectionscomprising a die (5) positioned at the outlet mouth of a passageway (2) through which a material is forced, **characterized in that** said die is arranged to be rotatable around an axis essentially perpendicular to the direction of extrusion, and is provided with one or several recesses (10) on its peripheral face (9), said recess or recesses (10) arranged to shape, in or laterally of one or several strings of material that forms or form lengthwise profiled sections (11,12) and is or are advanced past the die (5), profiled section parts (13) that are integral with said lengthwise profiled sections (11,12).

4. A device as claimed in claim 3, **characterized in that** the device comprises several, preferably four, rotatable dies (14,15,16,17), the relative positions of which are such that the axis of rotation (18,19,20,21) of the die or dies adjacent one die (14,15,16,17, respectively) extends perpendicularly to the axis of rotation (18,19,20,21, respectively) of the first mentioned die.

## Patentansprüche

1. Verfahren zum kontinuierlichen Extrudieren von Profilen,
**dadurch gekennzeichnet, dass**
eine in der Form eines plastisch/thermisch verformbaren Materials vorliegende Masse (3) kontinuierlich durch einen Kanal (2) hindurch gepresst wird,
zur Bildung von einem oder von mehreren längsverlaufenden Profilen (11, 12), das Material zwischen einer Extrusionswalze (5) und einem als Gegenstück dazu ausgebildeten Gesenk (8) extrudiert wird, wobei die Extrusionswalze sich um eine Achse dreht, die im Wesentlichen senkrecht zur Extrusionsrichtung verläuft, und
das Material (3) während dessen Förderung in eine oder mehrere in der Umfangsfläche (9) der Extrusionswalze (5) eingebrachte Ausnehmungen (10) gepresst wird, um somit während der Rotation der Extrusionswalze (5) in den oder seitlich der längsverlaufenden Profile (11, 12), und einstückig mit einem solchen Profil bzw. solchen Profilen, querverlaufende, voneinander beabstandete Profilteile (13) zu bilden.

2. Verfahren nach Anspruch 1,
**dadurch gekennzeichnet, dass** das geförderte Material (3) zu zwei parallelen längsverlaufenden Profilen (11, 12) geformt wird und dass das während der Rotation der Extrusionswalze (5) in die Ausnehmung oder Ausnehmungen (10) derselben eingeführte Material (3) Profilteile (13) bildet, welche die Form von querverlaufenden Streben aufweisen, die sich zwischen den Profilen (11, 12) erstrecken und einstückig mit diesen ausgebildet sind.

3. Vorrichtung zum kontinuierlichen Extrudieren von Profilen mit einer an der Ausgangsmündung eines Kanals (2) angeordneten Extrusionswalze (5), durch welche ein Material hindurchgepresst wird,
**dadurch gekennzeichnet, dass** die Walze derart angeordnet ist, dass sie um eine im Wesentlichen senkrecht zur Extrusionsrichtung verlaufende Achse drehbar ist, und mit einer oder mehreren, in ihrer Umfangsfläche (9) eingebrachten Ausnehmungen (10) versehen ist, wobei die Ausnehmung oder Ausnehmungen (10) derart angeordnet ist bzw. sind, dass sie in oder seitlich von einem oder mehreren längsverlaufende Profile (11, 12) bildenden Materialstrang bzw. - strängen, der bzw. die durch die Extrusionswalze (5) gefördert wird bzw. werden, Profilteile (13) ausbildet bzw. ausbilden, welche einstückig mit den längsverlaufenden Profilen (11, 12) ausgebildet sind.

4. Vorrichtung nach Anspruch 3,
**dadurch gekennzeichnet, dass** die Vorrichtung mehrere, vorzugsweise vier, Extrusionswalzen (14, 15, 16, 17) aufweist, welche derart zueinander positioniert sind, dass die Drehachse (18, 19, 20, 21) der jeweils an einer Walze (14, 15, 16, bzw. 17) angrenzenden Walze, bzw. Walzen sich senkrecht zur Drehachse (18, 19, 20, bzw. 21) der erstgenannten Walze erstreckt.

## Revendications

1. Procédé pour l'extrusion en continu de profilés,
**caractérisé en ce que**
l'on pousse en continu un matériau composite (3) sous forme de matériau déformable à chaud/plastiquement à travers un canal (2),
l'on extrude ledit matériau entre une filière en rotation (5) et une filière conjuguée (8), la filière en rotation tournant autour d'un axe sensiblement perpendiculaire à la direction d'extrusion afin de former un ou plusieurs profilés longitudinaux (11, 12), et
l'on contraint ledit matériau (3), à mesure qu'il avance, à pénétrer dans un ou plusieurs évidements (10) ménagés dans la face périphérique (9) de la filière (5) mobile en rotation afin de former, pendant la rotation de la filière (5), des parties de profilés (13) transversales disposées à distance l'une de l'autre dans ou sur le côté desdits profilés longitudinaux (11, 12) et réalisées d'un seul tenant avec ce ou ces profilés.

2. Procédé selon la revendication 1,
**caractérisé en ce que**
le matériau (3) à mesure qu'il avance prend la forme de deux profilés longitudinaux (11, 12) parallèles et **en ce que** le matériau (3) introduit dans l'évidement ou les évidements (10) de la filière (5) pendant la rotation de cette dernière forme des parties de profilé (13) formant des contrefiches transversales qui s'étendent entre lesdits profilés (11, 12) et sont réalisées d'un seul tenant avec eux.

3. Dispositif pour l'extrusion en continu de profilés comportant une filière (5) placée à l'orifice de sortie d'un canal (2) au travers duquel une matière est poussée,
**caractérisé en ce que** ladite filière est agencée de manière à être mobile en rotation autour d'un axe sensiblement perpendiculaire à la direction d'extrusion et est munie sur sa face périphérique (9) d'un ou de plusieurs évidements (10), ledit ou lesdits évidements (10) étant adaptés pour former, dans ou sur le côté d'un ou de plusieurs boudins de matériau qui forme ou forment les profilés longitudinaux (11, 12) et l'on fait passer par la filière (5) des parties de profilés (13) qui sont réalisées d'un seul tenant avec les profilés longitudinaux (11, 12).

4. Dispositif selon la revendication 3,
**caractérisé en ce que** le dispositif comporte plusieurs, de préférence quatre, filières (14, 15, 16, 17) mobiles en rotation positionnées l'une par rapport à l'autre de telle sorte que l'axe de rotation (18, 19, 20, 21) de la filière ou des filières adjacentes à une des filières (14, 15, 16, 17,respectivement) s'étend perpendiculairement à l'axe de rotation (18, 19, 20, 21, respectivement) de la première filière mentionnée.
